## Europäisches Patentamt

## European Patent Office

## Office européen des brevets

(11) Veröffentlichungsnummer: **0 094 696**
**B1**

(12) **EUROPÄISCHE PATENTSCHRIFT**

(45) Veröffentlichungstag der Patentschrift:
**08.10.86**

(51) Int. Cl.⁴: **G 04 C 3/14, H 02 P 8/00**

(21) Anmeldenummer: **83200441.0**

(22) Anmeldetag: **29.03.83**

(54) **Verfahren und Anordnung zur Steuerung und Regelung insbesondere eines Uhrenmotors mit permanentmagnetischem Läufer.**

(30) Priorität: **24.04.82 DE 3215440**

(43) Veröffentlichungstag der Anmeldung:
**23.11.83 Patentblatt 83/47**

(45) Bekanntmachung des Hinweises auf die Patenterteilung:
**08.10.86 Patentblatt 86/41**

(84) Benannte Vertragsstaaten:
**CH DE FR GB LI NL**

(56) Entgegenhaltungen:
**EP - A - 0 030 611**
**WO - A - 80/01113**
**DE - A - 2 949 947**
**GB - A - 2 038 043**
**GB - A - 2 064 834**

(73) Patentinhaber: **Braun Aktiengesellschaft,
Rüsselsheimer Strasse 22, D-6000 Frankfurt/Main (DE)**

(72) Erfinder: **Raducanu, Dan-Corneliu, Händelstrasse 36,
D-6232 Bad Soden (DE)**

(74) Vertreter: **Einsele, Rolf, Braun Aktiengesellschaft
Postfach 1120 Frankfurter Strasse 145, D-6242 Kronberg
Taunus (DE)**

ACTORUM AG

## Beschreibung

Die Erfindung bezieht sich auf ein Verfahren zur Regelung eines Uhrenmotors mit einem permanentmagnetischen Läufer, der mindestens ein Polpaar aufweist, und einen Ständer mit zwei oder mehr Wicklungen von denen mindestens eine Wicklung als Arbeitswicklung mit Steuerimpulsen beaufschlagt wird und mindestens eine weitere Wicklung als Steuerwicklung zur Abgabe von der Läuferbewegung gegenüber dem Ständer proportionalen Impulsen dient, die in rechteckförmige Istfrequenz-Impulse umgesetzt und bei der Nominallaufregelung bezüglich ihrer Breite und Phasenlage mit Sollfrequenz-Impulsen vorgegebener Frequenz verglichen werden, wobei bei den Sollfrequenz-Impulsen nacheilenden Istfrequenz-Impulsen Steuerimpulse zur Beschleunigung des permanentmagnetischen Läufers an die Arbeitswicklung abgegeben werden und bei Absinken der Drehzahl des permanentmagnetischen Läufers unter einen vorgegebenen Wert ein Selbstanlauf zur stufenweisen oder quasi-kontinuierlichen Steigerung der Läuferdrehzahl eingeleitet wird, indem die Steuerimpulse abwechselnd auf die Arbeitswicklung und Steuerwicklung bzw. zyklisch auf die Arbeitswicklung, Steuerwicklung und weitere Wicklungen gegeben werden, und wobei bei Erreichen einer festgelegten Drehzahl der Selbstanlauf selbsttätig abgeschaltet und die Nominallaufregelung eingeschaltet wird sowie auf eine Anordnung zur Durchführung dieses Verfahrens, wie sie im Oberbegriff des Anspruchs 3 definiert ist.

Ein Verfahren sowie eine Anordnung der eingangs genannten Art ist aus der DE-A 2 949 947 bekannt, sie dienen zur Regelung von Reaktionsmotoren von zeithaltenden Geräten wie Uhren, wobei der Motor einen permanentmagnetischen Läufer mit mindestens einem Polpaar und einen Ständer mit zwei oder mehr Wicklungen aufweist, von denen eine mit Antriebsimpulsen beaufschlagt wird. Bei dem bekannten Regelverfahren wird eine der Läuferdrehzahl proportionale Spannung von der zweiten Wicklung abgegeben und mit zwei Referenzspannungen verglichen. Bei drehzahlproportionalen Spannungen, die grösser als die beiden Referenzspannungen sind, werden zwei im wesentlichen rechteckförmige Signale abgegeben, die von Störimpulsen befreit und um eine einstellbare Zeit verzögert als Istfrequenz-Impulse einer Regeleinrichtung für den Nominalbetrieb eingegeben und dort mit Sollfrequenz-Impulsen verglichen werden. In Abhängigkeit von diesem Vergleich werden von der Regeleinrichtung für den Nominalbetrieb zwei verschiedene Nominallauf-Impulse zur Beschleunigung bzw. zum Abbremsen des Motors abgegeben. Sinkt die Läuferdrehzahl unter einen vorgegebenen Wert ab, so wird ein Selbstanlauf zur stufenweisen bzw. quasi-kontinuierlichen Steigerung der Läuferdrehzahl durch zyklisches Umschalten und Umpolen der Antriebsimpulse von der ersten zur zweiten Wicklung eingeleitet. Zu diesem Zweck werden aus den entstörten und verzögerten Istfrequenz-Impulsen sowie den Sollfrequenz-Impulsen Antriebsimpulse zur Beschleunigung des Motors erzeugt, indem die ansteigende Flanke der Antriebsimpulse mit den abfallenden Flanken der Sollfrequenz-Impulse und die abfallende Flanke der Antriebsimpulse mit der abfallenden Flanke der entstörten und verzögerten Istfrequenz-Impulse ausgelöst wird. Bei zu hoher Läuferdrehzahl, d.h. bei den Sollfrequenz-Impulsen voreilenden Istfrequenz-Impulsen werden Impulse zum Abbremsen des Läufers erzeugt, indem die ansteigenden Flanken der Bremsimpulse durch die abfallenden Flanken der Istfrequenz-Impulse und die abfallenden Flanken der Bremsimpulse mit den abfallenden Flanken der Sollfrequenz-Impulse ausgelöst werden.

Eine Verzögerung der Istfrequenz-Impulse ist erforderlich, um Antriebs- oder Bremsimpulse zu vermeiden, die abhängig von der Lage der Sollfrequenz-Impulse sind und deshalb in einem Beschleunigungsbereich bremsen bzw. in einem Bremsbereich beschleunigen können.

Wird im Selbstanlaufbetrieb eine festgelegte Drehzahl erreicht, so wird der Selbstanlaufbetrieb beendet und auf die Nominallaufregelung mit einer 32 Hz-Regelung umgeschaltet, in der sowohl die ansteigenden als auch die abfallenden Flanken der Sollfrequenz- und Istfrequenz-Impulse zur Auslösung der Antriebsimpulse für den Uhrenmotor verwendet werden. Diese Art der Nominallaufregelung beinhaltet eine sehr schnelle Regelung, da beide Halbwellen berücksichtigt werden, sie erweist sich jedoch teilweise als zu stark, so dass Regelschwingungen entstehen, die eine zu grosse Stromaufnahme der Anordnung zur Folge haben. Da in beiden Halbwellen geregelt wird, werden entsprechende Antriebs- oder Bremsimpulse an die Arbeitswicklung abgegeben, so dass die Spannungsversorgungsquelle entsprechend stark belastet wird.

Aus der GB-A 2 038 043 ist eine batteriebetriebene elektronische Uhr bekannt, die einen Schrittmotor zum Antrieb einer Zeitanzeigevorrichtung aufweist. Eine Antriebswicklung des Schrittmotors wird von einem Antriebsschaltkreis mit Antriebsimpulsen versehen, wobei der Antriebsschaltkreis über einen Impulswandler mit einem an einen Oszillator angeschlossenen Frequenzteiler zur Abgabe sowohl von Sollfrequenz-Impulsen als auch von Impulsen höherer Frequenz verbunden ist. Die Antriebswicklung des Schrittmotors ist zusätzlich über eine Detektorschaltung mit einer Abtastsignal-Erzeugungsschaltung verbunden, die in bestimmten Zeitabständen Unterbrechungsimpulse an die Antriebsschaltung zum Öffnen der Antriebswicklungsanschlüsse abgibt, so dass die Detektorschaltung die Wicklungsspannung erfassen und ein Statussteuersignal erzeugen kann, das an den Impulswandler abgegeben wird. In Abhängigkeit von dem Statussteuersignal wird die Antriebsleistung festgelegt, so dass im Falle erhöhter Belastung, beispielsweise bei einer Betätigung einer Kalenderanzeige, die Antriebsleistung erhöht wird. Dabei sind zur Überwachung des Schrittmotors verschiedene Überwachungszustände vorgesehen, die jeweils nach Verstreichen festlegbarer Zeiträume, die ihrerseits jeweils vom Beginn einer gewissen Betriebsart des Schrittmotors an gerechnet werden, eingeleitet werden.

Aufgabe der vorliegenden Erfindung ist es, ein Verfahren und eine Anordnung zur Regelung eines Uhrenmotors mit einem permanentmagnetischen Läufer anzugeben, die eine stabile Regelung bei geringer Stromaufnahme gewährleisten.

Diese Aufgabe wird bezüglich des Verfahrens erfindungsgemäss dadurch gelöst, dass unmittelbar nach Beendigung jedes Selbstanlaufbetriebes für eine festgelegte Zeitspanne ein erster Teil einer Nominallaufregelung abläuft, bei dem die von der Steuerwicklung abgeleiteten Istfrequenz-Impulse mit den Sollfrequenz-Impulsen häufiger verglichen werden als bei einem nach Beendigung der festlegbaren Zeitspanne ablaufenden zweiten Teil der Nominallaufregelung. Die erfindungsgemässe Lösung stellt sicher, dass nach Beendigung des Selbstanlaufbetriebes zunächst für einen festlegbaren Zeitraum auf die starke, aber instabile und mit grosser Stromaufnahme verbundene 32 Hz-Regelung und anschliessend für den Nominallaufbetrieb auf die schwächere, aber stabilere und mit geringerer Stromaufnahme verbundene 16 Hz-Nominallaufregelung umgeschaltet wird.

Eine Anordnung zur Durchführung des Verfahrens ist dadurch gekennzeichnet, dass eine Zeitstufe zur Festlegung der Zeitspanne des ersten Teils der Nominallaufregelung ein erstes Signal an die Verriegelungsschaltung und ein zweites Signal an einen Eingang eines NAND-Gatters abgibt, dessen anderer Eingang mit dem einen Ausgangssignal des Schieberegisters beaufschlagt ist und das ein Ausgangssignal abgibt, wobei die Ausgangssignale der Zeitstufe, das Ausgangssignal des NAND-Gatters und die auf die Arbeitswicklung in Abhängigkeit von den Ausgangssignalen des Schieberegisters und des NAND-Gatters gegebenen Antriebsimpulse folgender Wahrheitstabelle genügen:

| Zeitdauer | Signale | | Dekodierte Impuls-flanken $f_s$ und i | | Pegel Qc | Antriebsimpulse (in Abh. von $Q_A$, $Q_B$, $Q_C$, I, $\bar{I}$) |
| --- | --- | --- | --- | --- | --- | --- |
| | E | D | anstei-gend | abfallend | | |
| ca. 1 bis 2 Sek. nach Beendigung des Selbstanlaufs ($t_2 - t_5$) | L | H | ja | ja | abhängig von Gatter 5 | positive oder negative Impulse in Abhängigkeit von $Q_B$, $Q_C$, I, $\bar{I}$ |
| unbegrenzt $t_5 \rightarrow \infty$ | H | L | nein | ja | immer niedrig | nur positive Impulse in Abhängigkeit von $Q_B$ |

Anhand eines in der Zeichnung dargestellten Ausführungsbeispieles soll der der Erfindung zugrundeliegende Gedanke näher erläutert werden. Es zeigen:

Fig. 1 ein Blockschaltbild eines Uhrenmotors mit der gesamten Regelanordnung;

Fig. 2 eine zeitliche Darstellung der Impulse und Signale gemäss Fig. 1;

Fig. 3 eine detaillierte Darstellung der einzelnen Regelkreisglieder zur Regelung eines Uhrenmotors mit Selbstanlauf;

Fig. 4 eine zeitliche Darstellung der in der Anordnung gemäss Fig. 3 auftretenden Impulse und Signale;

Fig. 5 eine detaillierte Darstellung der Regelkreisglieder für einen Uhrenmotor mit Selbstanlauf und stabilisierter Regelung im Nominallaufbetrieb und

Fig. 6 eine zeitliche Darstellung der Istfrequenz-, Sollfrequenz- und Antriebsimpulse der Anordnung gemäss Fig. 5.

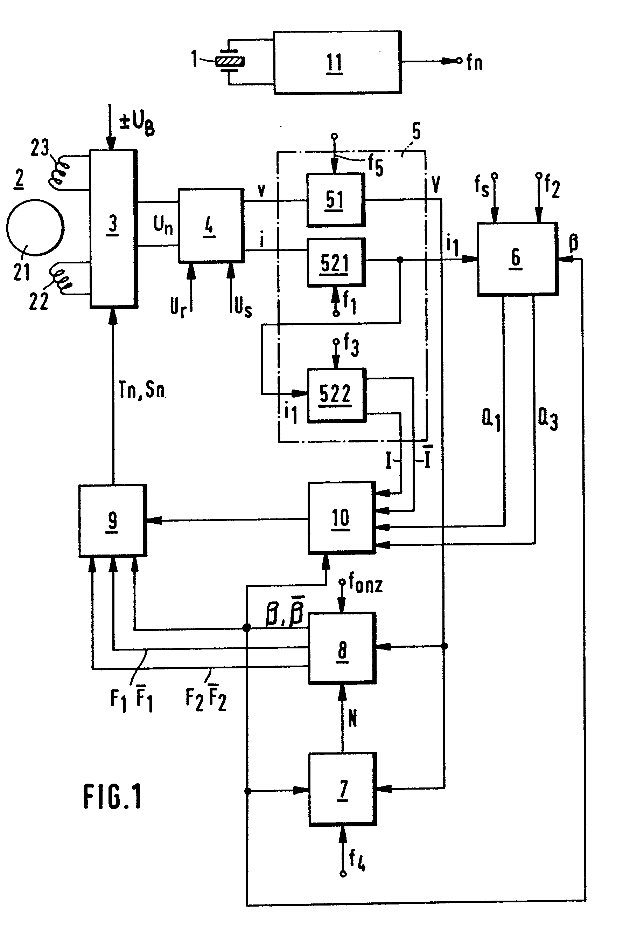

In Fig. 1 ist ein Blockschaltbild der Anordnung zur Regelung eines Uhrenmotors 2 dargestellt, der einen Läufer 21 mit permanent-magnetisch gebildeten Polen und einen nicht näher dargestellten Ständer mit zwei Wicklungen 22 und 23 aufweist. Wird eine der beiden Wicklungen 22, 23 mit Impulsen beaufschlagt, so lässt sich der Läufer 21 auf eine der Polpaarzahl und der Frequenz entsprechende Drehzahl bringen. Die Umdrehungen des Läufers 21 werden über eine Welle und ein Getriebe auf ein Anzeigesystem übertragen, welches beispielsweise eine Analoganzeige mittels mehrerer Zeiger und eines Ziffernblattes ermöglicht.

Für die Erfassung der Drehzahl n und damit der Istfrequenz dient die Steuerwicklung 23 des Ständers als Sensorwicklung zur Abgabe einer drehzahlproportionalen Spannung $U_n$ für die Drehzahlregelung. Diese Steuerwicklung 23 liegt ebenso wie die Arbeitswicklung 22 im Einflussbereich der Magnetlinien der Pole des Läufers 21. Bei der Rotation des Läufers 21 schneiden die Magnetfeldlinien der Pole periodisch die Sensorwicklung 23, wodurch an den Wicklungsenden eine der Drehzahl n und damit der Istfrequenz des Läufers 21 proportionale, sinusförmige Spannung $U_n$ mit Nulldurchgängen, das sogenannte Sensorsignal, ansteht. Diese drehzahlproportionale Spannung $U_n$ wird zusammen mit zwei Vergleichsspannungen $U_r$ und $U_s$ an die Eingänge eines Vergleichsgliedes 4 gelegt, wo das an der Steuerwicklung 23 abgegriffene sinusförmige Signal in zwei Rechteckimpulse für die Drehzahlregelung bzw. für die Einleitung des Selbstanlaufbetriebes umgesetzt wird. Die im wesentlichen rechteckförmigen Istfrequenz-Impulse i und Ausgangssignale v des Vergleichsgliedes 4 sind an die Eingänge eines nachgeschalteten Entstör- und Verzögerungsgliedes 51 für das Ausgangssignal v beziehungsweise eines Entstörgliedes 521 für die Istfrequenz-Impulse i gelegt. Das Entstör- und Verzögerungsglied 51 für das Ausgangssignal v wird mit einer Taktfrequenz $f_5$ beaufschlagt, während an das Entstörglied 521 für die Istfrequenz-Impulse i eine Taktfrequenz $f_1$ gelegt wird. Die entstörten Istfrequenz-Impulse $i_1$ werden sowohl an einen nachgeschalteten Phasenkomparator 6 als auch an ein Verzögerungsglied 522 abgegeben.

Das Verzögerungsglied 522 wird mit einer dritten Taktfrequenz $f_3$ beaufschlagt und gibt an seinen Ausgängen entstörte und verzögerte Istfrequenz-Impulse I beziehungsweise negierte Istfrequenz-Impulse Ī ab. Das Entstör- und Verzögerungsglied 51, das Entstörglied 521 und das Verzögerungsglied 522 für das Ausgangssignal v und die Istfrequenz-Impulse i sind in diesem Ausführungsbeispiel zu einem gemeinsamen Entstör- und Verzögerungsglied 5 strichpunktiert zusammengefasst.

Der Phasenkomparator 6 wird zusätzlich zu den entstörten Istfrequenz-Impulsen $i_1$ noch mit einer zweiten Taktfrequenz $f_2$ und mit einem für den Phasenvergleich erforderlichen Sollfrequenz-Signal $f_s$ sowie mit einem Umschaltsignal ß beaufschlagt. Die Ausgänge des Verzögerungsgliedes 522 und des Phasenkomparators 6 sowie das negierte Umschaltsignal ẞ̄ sind mit den Eingängen eines Verknüpfungsgliedes 10 verbunden, das Brems- bzw. Beschleunigungssignale an seinem Ausgang an eine Ansteuerlogik 9 abgibt.

Einer Selbstanlaufstufe 8 werden neben dem entstörten und verzögerten Selbstanlaufsignal V, das von der Entstör- und Verzögerungsstufe 51 abgegeben wird, zusätzlich ein oder mehrere voneinander verschiedene Frequenzsignale $f_{onz}$ sowie ein Signal N eingegeben. Das Signal N wird in einem Wartezeitglied 7 erzeugt, das aus einer oder mehreren Verzögerungsstufen besteht und dem eine vierte Taktfrequenz $f_4$ eingegeben wird. Die Reset-Eingänge aller Verzögerungsstufen des Wartezeitgliedes 7 werden synchron in Abhängigkeit von dem ebenfalls eingegebenen entstörten und verzögerten Selbstanlaufsignal V und von dem Umschaltsignal ß zurückgesetzt.

Von der Selbstanlaufstufe 8 werden neben dem Umschaltsignal ẞ̄ beziehungsweise dem negierten Umschaltsignal ß zwei Impulsfolgen $F_1$ beziehungsweise $\bar{F}_1$ sowie $F_2$ beziehungsweise $\bar{F}_2$ zusammen mit dem Ausgangssignal der Verknüpfungslogik 10 der nachgeschalteten Ansteuerlogik 9 zugeführt, an deren Ausgang Impulsfolgen $T_n$, $S_n$ zur Ansteuerung von Schaltern einer nachgeschalteten Schaltstufe 3, die sowohl mit einer Spannungsquelle $+U_B$, $-U_B$ als auch mit den Wicklungen 22 und 23 des Uhren-Motors 2 verbunden ist. Die Schaltstufe 3 verbindet dabei die Arbeitswicklung 22 des Uhren-Motors 2 beziehungsweise im Selbstanlaufbetrieb sowohl die Arbeitswicklung 22 als auch die Steuerwicklung 23 des Uhren-Motors 2 mit dem einen oder anderen Pol der Spannungsquelle $+U_B$ bzw. $-U_B$.

Der Anordnung ist ein Generator zugeordnet, der einen Schwingquarz 1 und einen Frequenzteiler 11 aufweist, an dem Rechteck-Impulse fn mit den Taktfrequenzen $f_1$ bis $f_5$ und den Frequenzen $f_{onz}$ und der Frequenz $f_s$ für das Sollfrequenz-Signal anstehen und die an den vorgenannten Stellen den entsprechenden Bauteilen der Anordnung zugeführt werden.

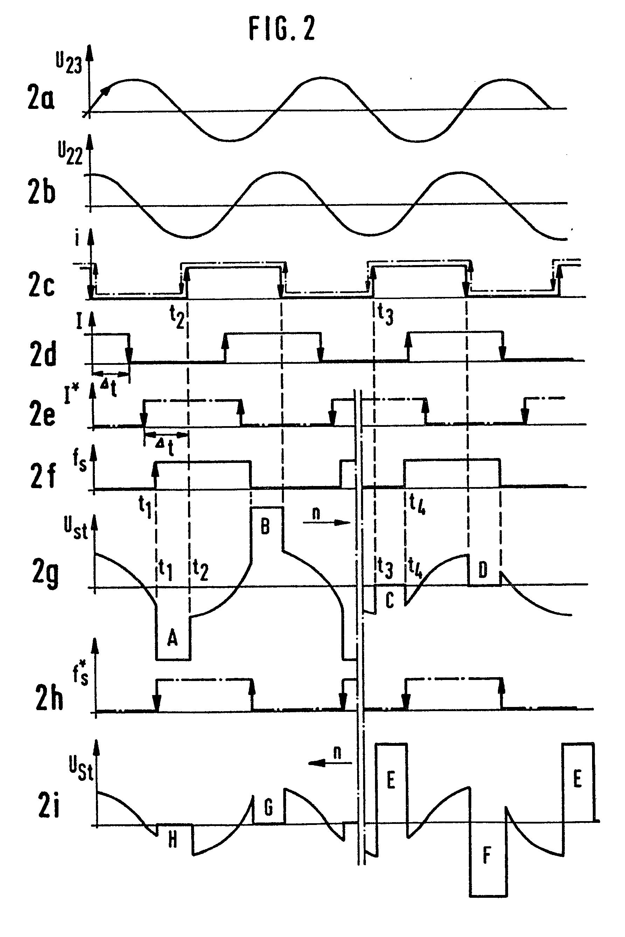

Die Funktionsweise dieser Anordnung im Bereich der Nominallaufregelung, d.h. nach Beendigung eines Selbstanlaufbetriebes beim üblichen Regelzustand, wird nachstehend anhand der zeitlichen Darstellung der einzelnen Signale gemäss Figur 2 näher erläutert.

Die in Figur 2a und b dargestellten sinusförmigen Spannungen stellen die gegeneinander um 90° elektrisch versetzten Spannungen an der Steuerwicklung $U_{23}$ und an der Arbeitswicklung $U_{22}$ dar. Mit Hilfe des Vergleichsgliedes 4 wird mittels der eingestellten Referenzspannung $U_s$ eine rechteckförmige Ausgangsspannung i erzeugt (Figur 2c), wobei die korrekte Drehrichtung des Läufers 21 und damit der Steuerwicklungs-Spannung $U_{23}$ mit einer ausgezogenen Linie dargestellt wurde und die der korrekten Drehrichtung entgegengesetzte Drehrichtung strichpunktiert dargestellt wurde. Dieses rechteckförmige Ausgangssignal i des Vergleichsgliedes 4 wird mittels des Entstörgliedes 521 von Störsignalen befreit und als Impulsfolge $i_1$ dem nachgeschalteten Verzögerungsglied 522 zugeführt, dessen Ausgangssignal I in Figur 2d dargestellt ist. Dieses Signal ist gegenüber der ansteigenden beziehungsweise abfallenden Flanke des Istfrequenz-Impulses i um eine Zeit $\Delta t$ verzögert. In Figur 2e ist dieses um die Zeit $\Delta t$ verzögerte Signal für die der korrekten Drehrichtung entgegengesetzte Drehrichtung als Signal Ī dargestellt.

Figur 2f zeigt die rechteckförmigen Sollfrequenz-Impulse $f_s$, deren Frequenz dem Zeitnormal der Uhr entspricht. Wie dieser zeitlichen Darstellung zu entnehmen ist, tritt in der korrekten Drehrichtung die ansteigende Flanke des Sollfrequenz-Impulses $f_s$ zum Zeitpunkt $t_1$ vor der zum Zeitpunkt $t_2$ ansteigenden Flanke des Istfrequenz-Impulses i auf. In diesem Zeitbereich zwischen den Zeitpunkten $t_1$ und $t_2$, d.h. mit der ansteigenden Flanke des Sollfrequenz-Impulses $f_s$ beginnend und endend mit der ansteigenden Flanke des Istfrequenz-Impulses i im negativen Halbwellenbereich und beginnend mit der abfallenden Flanke des Sollfrequenz-Impulses $f_s$ und endend mit der abfallenden Flanke des Istfrequenz-Impulses i im positiven Halbwellenbereich, werden der Arbeitswicklung 22 Antriebsimpulse erteilt. Diese Antriebsimpulse, die in Figur 2g als Impulse A und B dargestellt sind, werden jedoch auf die Arbeitswicklung 22 nur dann gegeben, wenn im negativen Halbwellenbereich das verzögerte Signal I = low ist beziehungsweise im positiven Halbwellenbereich das verzögerte Istfrequenz-Signal I = high ist. Würde innerhalb des Zeitbereichs, der zwischen den ansteigenden beziehungsweise abfallenden Flanken des Sollfrequenz-Impulses $f_s$ und des Istfrequenz-Impulses i liegt, das verzögerte Istfrequenz-Signal I ansteigen oder abfallen, so würde der Antriebsimpuls A beziehungsweise B entsprechend mit der ansteigenden beziehungsweise abfallenden Flanken des verzögerten Istfrequenz-Signals I abfallen.

Eilt der Istfrequenz-Impuls i dem Sollfrequenz-Impuls $f_s$ vor, d.h. tritt die ansteigende Flanke des Istfrequenz-Impulses i zum Zeitpunkt $t_3$ vor der ansteigenden Flanke des Sollfrequenz-Impulses $f_s$ zum Zeitpunkt $t_4$ auf, so wird der Läufer 21 des Uhren-Motors 2 durch Kurzschliessen der Arbeitswicklung 22 abgebremst. Dieses Kurzschliessen der Arbeitswicklung 22 wird mit der ansteigenden Flanke des Istfrequenz-Impulses i ausgelöst und endet mit der ansteigenden Flanke des Sollfrequenz-Impulses $f_s$ (Bereich C) und/oder mit der abfallenden Flanke des Istfrequenz-Impulses i und der abfallenden Flanke des Sollfrequenz-Impulses $f_s$ (Bereich D).

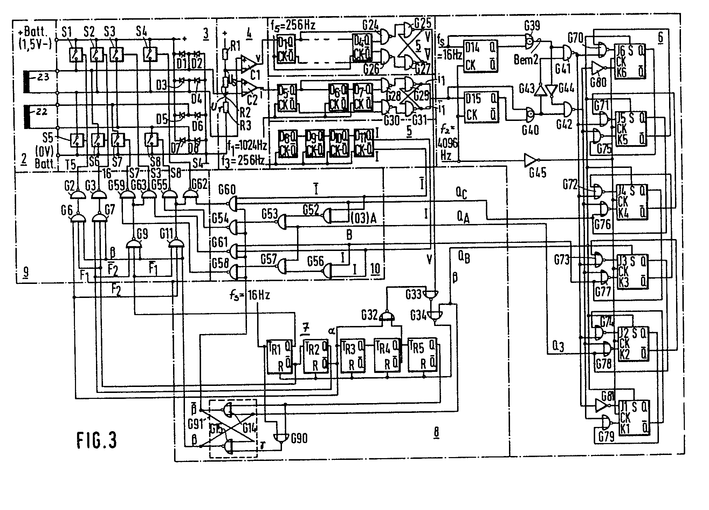

Die der Fig. 3 zu entnehmende detaillierte Darstellung der Regelkreisanordnung zeigt in strichpunktierter Einfassung die in Fig. 1 dargestellten Elemente.

Das Vergleichsglied 4 enthält zwei Komparatoren C1 und C2, deren positive Eingänge an das eine Ende der Steuerwicklung 23 angeschlossen sind. Während der negative Eingang des ersten Komparators C1 an die eine Referenzspannung $U_s$ angeschlossen ist, ist der negative Eingang des zweiten Komparators C2 an die andere Referenzspannung $U_r$ und an das andere Wicklungsende der Steuerwicklung 23 angeschlossen. Die Referenzspannungen $U_r$ bzw. $U_s$ werden an einem Widerstandsteiler mit den Widerständen R1 bis R3 abgegriffen. Die Ausgänge der beiden Komparatoren C1 und C2 mit den Ausgangssignalen v und i sind getrennt auf die eine Entstör- und Verzögerungsstufe 51 bzw. auf die Entstörstufe 521 geführt. Die Entstör- und Verzögerungsstufe 51 enthält 4 in Reihe geschaltete, getaktete Flip-Flops D1 bis D4, deren Takteingänge $C_k$ synchron mit einer festlegbaren fünften Taktfrequenz $f_5$, in diesem Fall einer Frequenz von 256 Hz, beaufschlagt sind von denen zur besseren Darstellung nur das erste und vierte Flip-Flop D1 und D4 gezeigt sind. Der Eingang des ersten getakteten Flip-Flops D1 ist mit dem Ausgang des ersten Komparators C1 verbunden. Die Ausgänge Q der getakteten Flip-Flops sind jeweils mit dem Eingang des nachfolgenden getakteten Flip-Flops verbunden. Der Ausgang des vierten Flip-Flops D4 ist an den Eingang eines nachgeschalteten ersten NAND-Gatters G24 gelegt, an dessen anderem Eingang der Ausgang des ersten getakteten Flip-Flops D1 angeschlossen ist. An die Eingänge eines zweiten NAND-Gatters G26 sind die negierten Ausgänge Q̄ des ersten bzw. des vierten getakteten Flip-Flops D1 bzw. D4 angeschlossen.

Das Entstörglied 521 enthält drei in Reihe geschaltete getaktete Flip-Flops D5–D7, deren Takteingänge $C_k$ synchron mit einer ersten Taktfrequenz $f_1$, in diesem Fall einer Frequenz von 1024 Hz, beaufschlagt sind. Entsprechend zur Entstör- und Verzögerungsstufe 51 ist der Eingang des ersten getakteten Flip-Flops D5 mit dem Ausgang des zweiten Komparators C2 und damit mit den Istfrequenz-Impulsen i verbunden. Die Ausgänge Q der getakteten Flip-Flops D5 und D6 sind jeweils mit dem Eingang des nachfolgenden getakteten Flip-Flops D6 bzw. D7 verbunden. Der Ausgang des letzten Flip-Flops D7 ist an den Eingang eines nachgeschalteten ersten NAND-Gatters G28 gelegt, an dessen anderem Eingang der Ausgang des ersten getakteten Flip-Flops D5 angeschlossen ist. An die Eingänge eines zweiten NAND-Gatters G30 sind die negierten Ausgänge Q̄ des ersten und letzten getakteten Flip-Flops D5 und D7 angeschlossen.

Das Verzögerungsglied 522 zur Erzeugung der entstörten und verzögerten Istfrequenz-Impulse I aus den entstörten Istfrequenz-Impulsen $i_1$ ist analog zur Entstör- und Verzögerungsstufe 51 aufgebaut und enthält die getakteten Flip-Flops D8–D11, deren Takteingänge $C_k$ synchron mit einer dritten Taktfrequenz $f_3$, in diesem Fall einer Frequenz von 256 Hz, beaufschlagt sind. Allen drei Gliedern 51, 521 und 522 ist folgende Anordnung gemeinsam: Die Ausgänge der beiden ersten NAND-Gatter G24, G26; G28, G30 sind an den Eingang eines dritten bzw. vierten NAND-Gatters G25, G27; G29, G31 gelegt, deren anderer Eingang jeweils mit dem Ausgang des jeweils anderen NAND-Gatters G25 bzw. G27, G29 bzw. G31 verbunden ist. Das Ausgangssignal V der Entstör- und Verzögerungsstufe 51, das identisch ist mit dem Ausgangssignal des NAND-Gatters G25 wird an den Eingang der nachgeschalteten Selbstanlaufstufe 8 angeschlossen. Die entstörten Istfrequenz-Impulse $i_1$, die identisch sind mit dem Ausgangssignal des NAND-Gatters G29, sind – wie bereits beschrieben – sowohl an den Eingang des Phasenkomparators 6 als auch an den Eingang der Verzögerungsstufe 522 angeschlossen.

Der Phasenkomparator 6 enthält zwei getaktete Flip-Flops D14, D15, deren Takteingänge $C_k$ mit einer zweiten Taktfrequenz $f_2$ von 4096 Hz beaufschlagt sind. Der Eingang des ersten getakteten Flip-Flops D14 ist mit Sollfrequenz-Impulsen $f_s$ von beispielsweise 16 Hz beaufschlagt, während an den Eingang des zweiten getakteten Flip-Flops D15 die entstörten Istfrequenz-Impulse $i_1$ gelegt sind. Die Ausgänge Q der beiden getakteten Flip-Flops D14 und D15 sind an den einen Eingang je eines nachgeschalteten Exklusiv-ODER-Gatters G39 und G40 gelegt, deren andere Eingänge mit den Sollfrequenz-Impulsen $f_s$ bzw. mit den entstörten Istfrequenz-Impulsen $i_1$ beaufschlagt sind.

Die Ausgänge der beiden Exklusiv-ODER-Gatter G39 und G40 sind an den einen Eingang je eines nachgeschalteten NAND-Gatters G41 bzw. G42 und über je einen Inverter G43 bzw. G44 an den anderen Eingang des jeweils anderen NAND-Gatters G42 bzw. G41 angeschlossen. Die Ausgänge dieser beiden NAND-Gatter G41 und G42 werden zusammen mit der über einen Inverter G45 geführten zweiten Taktfrequenz $f_2$ und dem Umschaltsignal $\beta$ dem sechs J/K-Flip-Flops J1 bis J6 sowie zehn ODER-Gatter G70 bis G79 sowie zwei weitere Inverter G80 und G81 umfassenden Phasenkomparator 6 zugeführt.

Die Setz-Eingänge S der J/K-Flip-Flops J1 bis J6 werden mit dem Umschaltsignal $\beta$ beaufschlagt, während die Takteingänge $C_k$ der Flip-Flops J1 bis J6 an die invertierte Taktfrequenz $f_2$ angeschlossen sind. Der J-Eingang des ersten J/K-Flip-Flops J1 ist an den Ausgang des einen Inverters G81 und die J-Eingänge des zweiten bis sechsten J/K-Flip-Flops J2 bis J6 sind an die Ausgänge der ODER-Gatter G74 bis G70 angeschlossen.

Die K-Eingänge der ersten fünf J/K-Flip-Flops J1 bis J5 sind an die Ausgänge weiterer ODER-Gatter G79 bis G75 und der K-Eingang des sechsten J/K-Flip-Flops J6 ist an den Ausgang des weiteren Inverters G80 angeschlossen. Während der eine Eingang der ausgangsseitig mit den J-Eingängen verbundenen ODER-Gatter G70 bis G74 und der Eingang des einen Inverters G81 an den Ausgang des ersten NAND-Gatters G41 angeschlossen ist, sind die einen Eingänge der mit den K-Eingängen verbundenen ODER-Gatter G75 bis G79 und der Eingang des weiteren Inverters G80 mit dem Ausgang des zweiten NAND-Gatters G42 verbunden. Der weitere Eingang der mit den J-Eingängen der J/K-Flip-Flops verbundenen ODER-Gatter G70 bis G74 ist an den negierten Ausgang $\bar{Q}$ des jeweils vorangestellten J/K-Flip-Flops J1 bis J5 angeschlossen. Die weiteren Eingänge der mit den K-Eingängen der J/K-Flip-Flops J1 bis J5 verbundene ODER-Gatter G75 bis G79 sind an den Ausgang Q des jeweils nachgestellten J/K-Flip-Flops J2 bis J6 angeschlossen.

Von den Ausgängen Q des dritten, vierten und fünften J/K-Flip-Flops J3 bis J5 werden die entsprechenden Brems- bzw. Antriebsimpulse $Q_A$, $Q_B$ und $Q_C$ an die nachgeschaltete Verknüpfungslogik 10 abgegeben.

Mittels der acht NAND-Gatter der Verknüpfungslogik 10 werden die Ausgangssignale I, $\bar{I}$ sowie $Q_A$, $Q_B$ und $Q_C$ der Verzögerungsstufe 522 bzw. des Phasenkomparators 6 sowie das negierte Umschaltsignal $\bar{\beta}$ mit den Ausgängen des jeweils vorangestellten NAND-Gatters in folgender Weise verknüpft:

a) Gatter G52: Signal $\bar{I}$ und $Q_C$
b) Gatter G56: Signal $Q_B$ und $\bar{I}$
c) Gatter G53: Ausgangssignal des Gatters G52 und Signal $Q_A$
d) Gatter G57: Ausgangssignal des Gatters G56 und Signal $Q_A$
e) Gatter G60: Umschaltsignal $\beta$, Signal $\bar{I}$ und Signal $Q_C$

f) Gatter G54: Ausgangssignal des Gatters G53 und Umschaltsignal $\bar{\beta}$
g) Gatter G61: Umschaltsignal $\bar{\beta}$, Signal $Q_B$ und I
h) Gatter G58: Ausgangssignal des Gatters G57 und Umschaltsignal $\bar{\beta}$.

Der Selbstanlaufstufe 8 wird neben dem entstörten und verzögerten Selbstanlaufsignal V, das von der Entstör- und Verzögerungsstufe 51 abgegeben wird, nur ein einzelnes weiteres Frequenz-Signal, und zwar das Taktsignal des Wartezeitgliedes 7 eingegeben. Die Reset-Eingänge der beiden Verzögerungsstufen TR1 und TR2 des Wartezeitgliedes 7 und der T-Flip-Flops TR3 bis TR5 der Selbstanlaufstufe 8 werden synchron in Abhängigkeit von dem ebenfalls eingegebenen entstörten und verzögerten Selbstanlaufsignal V und dem Umschaltsignal $\bar{\beta}$, das von der Selbstanlaufstufe 8 abgegeben wird, zurückgesetzt.

Die Selbstanlaufstufe 8 besteht in diesem Ausführungsbeispiel aus drei T-Flip-Flops TR3 bis TR5, deren Eingänge mit dem Ausgang Q des vorangegangenen Flip-Flops bzw. mit dem Ausgangssignal des aus zwei T-Flip-Flops TR1 und TR2 zusammengesetzten Wartezeitgliedes 7 beaufschlagt sind. Der Ausgang des letzten T-Flip-Flops TR5 ist zusammen mit den Sollfrequenz-Impulsen $f_s = 16$ Hz an ein NAND-Gatter G90 gelegt, dessen Ausgangssignal zusammen mit dem Ausgangssignal des dritten T-Flip-Flops TR5 an den Eingang einer Kippstufe, die aus zwei miteinander in bekannter Weise verbundenen NAND-Gattern G14, G15 besteht, gelegt ist. Am Ausgang dieser Kippstufe steht das Umschaltsignal $\beta$ bzw. das negierte Umschaltsignal $\bar{\beta}$ an. Das Reset-Signal für die T-Flip-Flops TR1, TR2 bzw. TR3 bis TR5 des Wartezeitgliedes 7 und der Selbstanlaufstufe 8 wird vom Ausgang eines NAND-Gatters G34 abgegeben, an dessen einem Eingang das Umschaltsignal $\bar{\beta}$ anliegt und dessen anderer Eingang mit dem Ausgang eines NAND-Gatters G33 verbunden ist. Ein Eingang des NAND-Gatters G33 ist mit dem Ausgang eines weiteren NAND-Gatters G32 verbunden, während am anderen Eingang des NAND-Gatters G33 das entstörte und verzögerte Selbstanlaufsignal V anliegt. Die beiden Eingänge des NAND-Gatters G32 sind einerseits mit dem negierten Ausgang $\bar{Q}$ des zweiten T-Flip-Flops TR2 des Wartezeitgliedes 7 und andererseits mit dem negierten Ausgangssignal $\bar{Q}$ des zweiten T-Flip-Flops TR4 der Selbstanlaufstufe 8 verbunden. Zur Vorgabe verschiedener Frequenzsignale dienen in diesem Ausführungsbeispiel die Ausgänge Q und $\bar{Q}$ der beiden T-Flip-Flops TR1 und TR2 des Wartezeitgliedes 7, die die eingegebene Taktfrequenz von z.B. 16 Hz auf 8 Hz bzw. 4 Hz herunterteilen und somit die Frequenzsignale $F_1$, $\bar{F}_1$, $F_2$, $\bar{F}_2$ vorgeben.

Die Ausgangssignale der Selbstanlaufstufe 8 und die Ausgangssignale der Verknüpfungsstufe 10 werden in der nachgeschalteten Ansteuerlogik 9 in der Weise miteinander verknüpft, dass sie der folgenden Wahrheitstabelle zur Ansteuerung der Schalter S1–S8 des Schaltgliedes 3 genügen:

| Ansteuersignale | | | | | | FET-Schalter | | | | | | | |
|---|---|---|---|---|---|---|---|---|---|---|---|---|---|
| $\bar{\beta}$ | $Q_C$ | $Q_B$ | $Q_A$ | I | $\bar{\text{I}}$ | S1 | S2 | S3 | S4 | S5 | S6 | S7 | S8 |
| H | L | L | H | X | X | AUS | AUS | AUS | AUS | AUS | AUS | AUS | AUS |
| H | L | L | L | X | X | │ | │ | AUS | AUS | │ | │ | EIN | EIN |
| H | L | L | H | X | X | │ | │ | AUS | AUS | │ | │ | AUS | AUS |
| H | L | H | H | H | L | │ | │ | EIN | AUS | │ | │ | EIN | AUS |
| H | L | H | H | L | H | │ | │ | AUS | AUS | │ | │ | AUS | AUS |
| H | H | H | H | H | L | │ | │ | EIN | AUS | │ | │ | EIN | AUS |
| H | H | H | H | L | H | AUS | AUS | AUS | EIN | AUS | AUS | AUS | EIN |

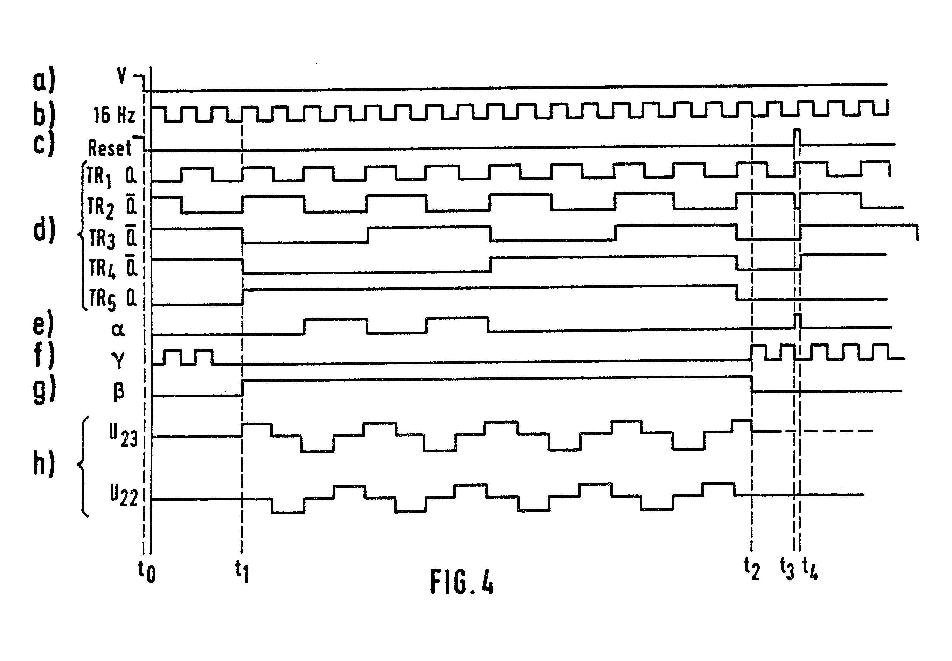

Im Zusammenhang mit der zeitlichen Darstellung der Signale gemäss Figur 4 soll die Funktionsweise der Anordnung nach Figur 3 näher erläutert werden. In Figur 4 sind von oben nach unten folgende Signale dargestellt:

a) das Selbstanlaufsignal V,
b) die 16 Hz-Taktfrequenz für das Wartezeitglied,
c) das Reset-Signal zum Zurücksetzen der T-Flip-Flops der Selbstanlaufstufe und des Wartezeitgliedes,
d) die Ausgangssignale der T-Flip-Flops der Selbstanlaufstufe und des Wartezeitgliedes,
e) das Ausgangssignal Q des Wartezeitgliedes,
f) das Ausgangssignal $\gamma$ des NAND-Gliedes G90,
g) das Umschaltsignal $\beta$ und
h) die Spannung an den Wicklungen 22 und 23 des Uhrenmotors 2.

Sinkt die Drehzahl des Läufers 21 des Motors 2 unter einen bestimmten Wert, so dass das Ausgangssignal V eine gewisse Zeitspanne nicht mehr auf hohes Potential kommt, so bleibt während dieser Zeitspanne der gemeinsame Reset-Eingang R der T-Flip-Flops TR1 bis TR5 des Wartezeitgliedes 7 und der Selbstanlaufstufe 8 auf niedrigem Potential. Dabei wird vorausgesetzt, dass das Umschaltsignal $\beta$ im vorangegangenen Regelungsbetrieb im Zustand niedrigen Potentials war und wenigstens das Ausgangssignal Q des dritten T-Flip-Flops TR5 negierte Ausgangssignal $\bar{Q}$ des zweiten T-Flip-Flops TR4 der Selbstanlaufstufe 8 im Zustand hohen Potentials war. Im gesamten hier betrachteten Zeitbereich befindet sich das Ausgangssignal V im Zustand niedrigen Potentials, zum Beispiel, weil der Läufer 21 des Motors 2 sich nicht mehr bewegt. Mit dem abfallenden Selbstanlaufsignal V verschwindet auch das Reset-Signal zum Zeitpunkt $t_0$ (Figur 4c). Damit werden die T-Flip-Flops TR1 bis TR5 wirksam geschaltet und untersetzen die eingegebene Taktfrequenz von zum Beispiel 16 Hz (Figur 4b) gemäss der Darstellung in Figur 4d, die die negierten Ausgänge der T-Flip-Flops TR1 bis TR4 bzw. das Ausgangssignal Q des fünften T-Flip-Flops TR5 darstellen. Solange das Ausgangssignal Q des fünften T-Flip-Flops TR5 auf hohem Potential ist, erscheint am Ausgang des Gatters G90 ein der Taktfrequenz entsprechendes Signal $\gamma$. Bleibt das Selbstanlaufsignal V während einer bestimmten Zeitspanne auf hohem Potential, so wird das Flip-Flop G91 gesetzt, so dass das Umschaltsignal $\beta$ zum Zeitpunkt $t_1$ in den Zustand H und das negierte Umschaltsignal $\bar{\beta}$ in den Zustand L gesetzt wird. Nachdem das Umschaltsignal $\beta$ in den Zustand H gesetzt worden ist und solange das Umschaltsignal $\beta$ in diesem Zustand verbleibt, wird ein Zurücksetzen der T-Flip-Flops TR1 bis TR5 verhindert, da das Reset-Signal für die fünf T-Flip-Flops TR1 bis TR5 wegen $\beta$ = H im Zustand L verbleibt. Solange das Umschaltsignal $\beta$ im Zustand H bleibt, dauert der Selbstanlaufbetrieb nach dem Prinzip eines Schrittmotors mit zwei Wicklungen an. Während dieser Zeit werden die beiden Wicklungen 22 und 23 des Uhrenmotors 2 mit Frequenzsignalen gemäss Figur 4h beaufschlagt, die mittels der Ansteuerlogik aus den vom ersten und zweiten T-Flip-Flop TR1 und TR2 an ihren Ausgängen Q bzw. negierten Ausgängen $\bar{Q}$ abgegebenen Frequenzen zusammengesetzt werden. Dies geschieht in der Weise, dass die oben angegebene Schalttabelle für die Schalter S1 bis S8 erfüllt ist. Diese Einschaltlogik für die Schalter S1 bis S8 hat im Zeitbereich vom Zeitpunkt $t_1$–$t_2$ die in Figur 4h wiedergegebene Impulsfolge für die Wicklungen 22 und 23 zum Ergebnis.

Wird das Ausgangssignal Q des fünften T-Flip-Flops TR5 in den Zustand L gesetzt, so wird das Flip-Flop G91 nach Ablauf eines weiteren Taktes des eingegebenen Frequenzsignals von zum Beispiel 16 Hz mit dem Umschaltsignal $\bar{\beta}$ auf L und dem negierten Umschaltsignal $\beta$ auf H gesetzt, was zum Zeitpunkt $t_2$ eine Änderung des bisherigen Selbstanlaufbetriebes in den Nominallaufbetrieb bedeutet. Mit dieser Art der Impulsverknüpfung wird erreicht, dass der letzte Selbstanlauf-Impuls die halbe Breite, entsprechend der eingegebenen Taktfrequenz, gegenüber den vorangegangenen Selbstanlaufimpulsen aufweist. Zum Zeitpunkt $t_3$ wird vom zweiten T-Flip-Flop TR2 am negierten Ausgang ein Signal gemäss Figur 4e abgegeben, das zum Rücksetz-Impuls gemäss Figur 4c führt, dessen abfallenden Flanke zum Zeitpunkt $t_4$ auftritt. Damit ist der Selbstanlaufbetrieb beendet und im darauffolgenden Nominalaufbetrieb dient die zweite Wicklung 23 des Uhrenmotors 2 als Steuerwicklung, deren Ausgangssignale zu den Signalen V und I, wie oben beschrieben, führen.

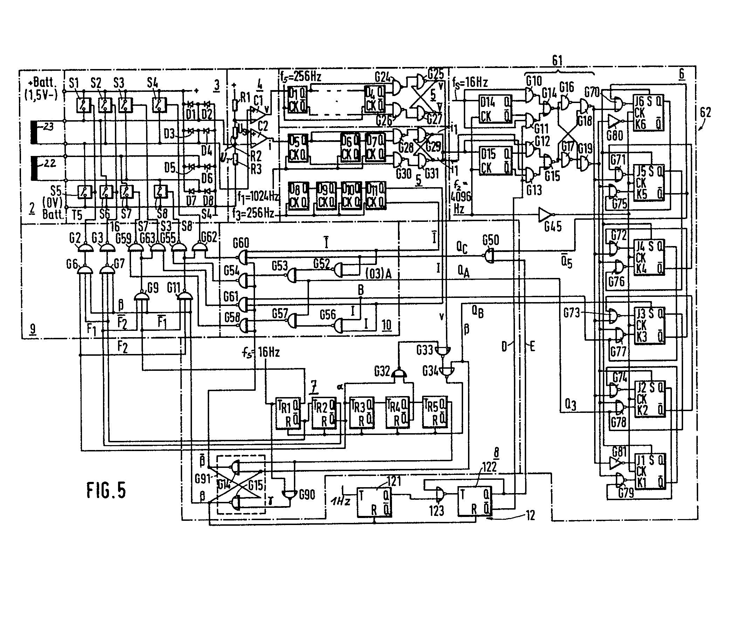

Das in Fig. 5 dargestellte detaillierte Schaltbild verdeutlicht das erfindungsgemässe Verfahren und die erfindungsgemässe Anordnung zur Regelung eines Uhrenmotors und entspricht weitestgehend der Anordnung gemäss Fig. 3, so dass auf eine nähere Erläuterung der Funktion und einzelnen Elemente dieser Anordnung verzichtet wird. Die in der Fig. 5 verwendeten Bezugsziffern entsprechen den in Fig. 3 verwendeten Bezugsziffern zur Bezeichnung gleicher Bauelemente.

Gegenüber der Anordnung gemäss Fig. 3 ist jedoch eine zusätzliche Zeitstufe 12 sowie eine abgewandelte Verriegelungsschaltung 61 im Phasenkomparator 6 vorgesehen. Darüber hinaus wird das Steuersignal $Q_C$ durch Verknüpfung des Ausgangssignals $\bar{Q}_5$ des Schieberegisters 62 mit dem Ausgangssignal E der Zeitstufe 12 gebildet.

Die weiteren Blöcke sowie die darin enthaltenen Elemente der Anordnung gemäss Fig. 5 entsprechen identisch den Blöcken bzw. darin enthaltenen Elementen der Steuer- und Regelanordnung gemäss Fig. 3.

Die Zeitstufe 12 enthält zwei T-Flip-Flops 121, 122, deren Reset-Eingänge mit dem Umschaltsignal β zum Umschalten vom Selbstanlaufbetrieb auf den sich aus einem ersten und zweiten Teil zusammensetzenden Nominallaufbetrieb beaufschlagt sind. Der T-Eingang des ersten T-Flip-Flops 121 der Zeitstufe 12 wird mit einem Frequenzsignal von 1 Hz beaufschlagt, während der Ausgang Q des ersten T-Flip-Flops 121 an den einen Eingang eines NAND-Gatters 123 gelegt wird, dessen anderer Eingang mit dem Ausgang Q des zweiten T-Flip-Flops 122 beaufschlagt wird. Der Ausgang des NAND-Gatters 123 ist mit dem Eingang des zweiten T-Flip-Flops 122 verbunden, während der Q-Ausgang des zweiten T-Flip-Flops 122 das Signal E und der $\bar{Q}$-Ausgang des zweiten T-Flip-Flops 122 das Signal D abgibt. Das negierte Ausgangssignal des zweiten T-Flip-Flops 122 bzw. der Zeitstufe 12 wird an die Verriegelungsschaltung 61 abgegeben, während das Ausgangssignal Q als Signal E an den einen Eingang eines NAND-Gatters G50 abgegeben wird, dessen anderer Eingang mit dem Ausgangssignal $\bar{Q}_5$ des Schieberegisters 62 beaufschlagt wird. Das Ausgangssignal γ dieses NAND-Gatters G50 liefert das Steuersignal $Q_C$.

Die Verriegelungsschaltung 61 des Phasenkomparators 6 ist an die Ausgänge der beiden D-Flip-Flops D14 und D15 sowie an das D-Ausgangssignal der Zeitstufe 12 und an die 16 Hz-Sollfrequenz-Impulse fs und den Ausgang des Entstör- und Verzögerungsgliedes 5 angeschlossen. Die Verriegelungsschaltung 61 enthält vier UND-Gatter G10 bis G13, deren Ausgänge jeweils paarweise an die Eingänge zweier nachgeschalteter NOR-Gatter G14 und G15 gelegt sind. Die Ausgänge der beiden NOR-Gatter G14 und G15 werden jeweils über ein Negatinsglied G16 und G17 mit dem einem Eingang jeweils eines nachgeschalteten NAND-Gatters G18 und G19 verbunden. Zusätzlich sind die Ausgänge der beiden NOR-Gatter G14 und G15 überkreuz mit dem jeweils zweiten Eingang der NAND-Gatter G18 und G19 verbunden. Analog zur Anordnung gemäss Fig. 3 werden die Ausgänge der beiden NAND-Gatter G18 und G19 an die Eingänge des Schieberegisters 62 gelegt.

Die Eingänge der vier UND-Gatter G10 bis G13 der Verriegelungsschaltung 61 sind in folgender Weise beaufschlagt: Die Eingänge des ersten UND-Gatters G10 sind sowohl mit den 16 Hz-Sollfrequenz-Impulsen fs als auch mit dem Q-Ausgang des D-Flip-Flops D14 verbunden.

Die Eingänge des zweiten UND-Gatters G11 sind mit den 16 Hz-Sollfrequenz-Impulsen fs, dem negierten Ausgangssignal $\bar{Q}$ des D-Flip-Flops D14 und dem D-Ausgangssignal der Zeitstufe 12 belegt. Die Eingänge des dritten UND-Gatters G12 sind mit dem negierten Ausgangssignal $\bar{i}_1$ der Entstör- und Verzögerungsstufe und mit dem Q-Ausgangssignal des D-Flip-Flops D15 beaufschlagt.

Schliesslich sind die Eingänge des vierten UND-Gatters G13 mit dem Ausgangssignal $i_1$ der Entstör- und Verzögerungsstufe 5, dem negierten Ausgangssignal $\bar{Q}$ des D-Flip-Flops D15 und mit dem D-Ausgangssignal der Zeitstufe 12 belegt.

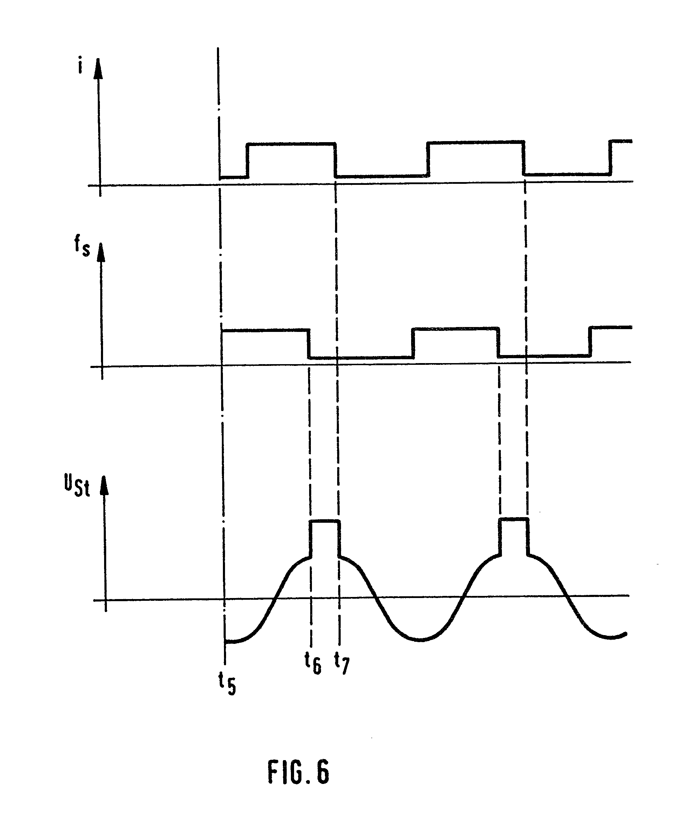

Die Funktionsweise der Anordnung gemäss Fig. 5 soll nachstehend anhand der zeitlichen Darstellung gemäss Fig. 6 näher erläutert werden.

In Fig. 6 sind von oben nach unten in zeitlicher Darstellung das Istfrequenz-Impuls-Signal i, das Sollfrequenz-Impuls-Signal $f_s$ sowie das an die Arbeitswicklung des Uhrenmotors abgegebene Steuersignal dargestellt.

Nach Ablauf des Selbstanlaufbetriebes zum Zeitpunkt $t_2$, d.h. wenn das Umschaltsignal β niedriges Potential annimmt, vergeht eine Zeitspanne von 1 bis 2 Sekunden, in der die Ausgangssignale der Zeitstufe 12 in der Weise umschalten, dass das Ausgangssignal E auf hohes Potential und das Ausgangssignal D auf niedriges Potential geht. Innerhalb dieser Zeitspanne verläuft der erste Teil der Nominallaufregelung mit einem 32 Hz-Takt gemäss der Darstellung in Fig. 4 im Zusammenhang mit der Anordnung gemäss Fig. 3 bzw. Fig. 5. Nach Ablauf dieser Zeitspanne, d.h. zum Zeitpunkt $t_5$, mit dem Beginn des zweiten Teils der Nominallaufregelung und mit hohem Potential des Ausgangssignals E und niedrigem Potential des Signals D der Zeitstufe 12 werden in den D-Flip-Flops D14 und D15 sowie in der Verriegelungsschaltung 61 des Phasenkomparators 6 nur noch die abfallenden Flanken der Istfrequenz-Impulse $i_1$ bzw. der Sollfrequenz-Impulse $f_s$ dekodiert und weiter auf das Schieberegister 62 gegeben. Dies hat zur Folge, dass das Ausgangssignal $Q_c$ des NOR-Gatters G50 auf niedrigem Potential bleibt und auf die Arbeitswicklung 22 des Uhrenmotors 2 nur positive Impulse gegeben werden. Diese Impulse werden der in der Arbeitswicklung 22 induzierten sinusförmigen Spannung während deren positiven Halbwellen überlagert, mit den abfallenden Flanken der Sollfrequenz-Impulse $f_s$ sowie den abfallenden Flanken der Istfrequenz-Impulse i zu den Zeitpunkten $t_6$ und $t_7$ an die Arbeitswicklung 22 als Antriebsimpulse abgegeben bzw. in nicht näher dargestellter Weise bei voreilenden Istfrequenz-Impulsen i gegenüber den Sollfrequenz-Impulsen $f_s$ als Brems-Impulse an die Arbeitswicklung 22 abgegeben. Die Verknüpfung der einzelnen Impulse der Zeitstufe 12, der Verriegelungsschaltung 61 und des Steuersignals $Q_c$ erfolgt nach der folgenden Wahrheitstabelle:

| Zeitdauer | Signale | | Dekodierte Impulsflanken $f_s$ und i | | Pegel $Q_c$ | Antriebsimpulse (in Abh. von $Q_A$, $Q_B$, $Q_C$, I, $\bar{I}$) |
|---|---|---|---|---|---|---|
| | E | D | ansteigend | abfallend | | |
| ca. 1 bis 2 Sek. nach Beendigung des Selbstanlaufs $(t_2 - t_5)$ | L | H | ja | ja | abhängig von Gatter 5 | positive oder negative Impulse in Abhängigkeit von $Q_B$, $Q_C$, I, $\bar{I}$ |
| unbegrenzt $t_5 \rightarrow \infty$ | H | L | nein | ja | immer niedrig | nur positive Impulse in Abhängigkeit von $Q_B$ |

## Patentansprüche

1. Verfahren zur Regelung eines Uhrenmotors (2) mit einem permanentmagnetischen Läufer (21), der mindestens ein Polpaar aufweist, und einem Ständer mit zwei oder mehr Wicklungen (22, 23), von denen mindestens eine Wicklung als Arbeitswicklung (22) mit Steuerimpulsen beaufschlagt wird und mindestens eine weitere Wicklung als Steuerwicklung (23) zur Abgabe von der Läuferbewegung gegenüber dem Ständer proportionalen Impulsen dient, die in rechteckförmige Istfrequenz-Impulse (i) umgesetzt und bei der Nominallaufregelung bezüglich ihrer Breite und Phasenlage mit Sollfrequenz-Impulsen $(f_s)$ vorgegebener Frequenz verglichen werden, wobei bei den Sollfrequenz-Impulsen $(f_s)$ nacheilenden Istfrequenz-Impulsen (i) Steuerimpulse $(T_n, S_n)$ zur Beschleunigung des permanentmagnetischen Läufers (21) an die Arbeitswicklung (22) abgegeben werden und bei Absinken der Drehzahl (n) des permanentmagnetischen Läufers (21) unter einen vorgegebenen Wert ein Selbstanlauf zur stufenweisen oder quasi-kontinuierlichen Steigerung der Läuferdrehzahl eingeleitet wird, indem die Steuerimpulse $(T_n, S_n)$ abwechselnd auf die Arbeitswicklung (22) und Steuerwicklung (23) bzw. zyklisch auf die Arbeitswicklung (22), Steuerwicklung (23) und weitere Wicklungen gegeben werden, und wobei bei Erreichen einer festgelegten Drehzahl der Selbstanlauf selbsttätig abgeschaltet und die Nominallaufregelung eingeschaltet wird, dadurch gekennzeichnet, dass unmittelbar nach Beendigung jedes Selbstanlaufbetriebes für eine festgelegte Zeitspanne $(t_2-t_5)$ ein erster Teil einer Nominallaufregelung abläuft, bei dem die von der Steuerwicklung (23) abgeleiteten Istfrequenz-Impulse (i) mit den Sollfrequenz-Impulsen $(f_s)$ häufiger verglichen werden als bei einem nach Beendigung der festlegbaren Zeitspanne $(t_2-t_5)$ ablaufenden zweiten Teil der Nominallaufregelung.

2. Verfahren nach Anspruch 1, bei dem die Istfrequenz-Impulse (i) verzögert werden und in der festlegbaren Zeitspanne $(t_2-t_5)$ des ersten Teils der Nominallaufregelung nach Beendigung des Selbstanlaufbetriebes zur Erhöhung einer Drehzahl des Uhrenmotors (2) in der gewünschten Drehrichtung die ansteigenden Flanken der Steuerimpulse $(T_n, S_n)$ durch die ansteigenden Flanken der Sollfrequenz-Impulse $(f_s)$ und die abfallenden Flanken der Steuerimpulse $(T_n, S_n)$ durch die ansteigenden Flanken der Istfrequenz-Impulse (i), die während eines entstörten und verzögerten Istfrequenz-Impulses (I) auftreten, bzw. zum Verringern der Drehzahl des Uhrenmotors (2) entgegen der gewünschten Drehrichtung die ansteigenden Flanken der Steuerimpulse $(T_n, S_n)$ durch die abfallenden Flanken der Sollfrequenz-Impulse $(f_s)$ und die abfallenden Flanken der Steuerimpulse $(T_n, S_n)$ durch die abfallenden Flanken der Istfrequenz-Impulse (i), die während eines entstörten und verzögerten Istfrequenz-Impulses (I) auftreten, ausgelöst werden oder zur Verringerung der Drehzahl des Uhrenmotors (2) sowohl in der gewünschten als auch entgegen der gewünschten Drehrichtung die Arbeitswicklung (22) um Zeitpunkt der ansteigenden bzw. abfallenden Flanke der Istfrequenz-Impulse (i) bis zum Zeitpunkt des Auftretens der ansteigenden bzw. abfallenden Flanke der Sollfrequenz-Impulse $(f_s)$ kurzgeschlossen wird, wobei die Steuerimpulse $(T_n, S_n)$ der in der Arbeitswicklung (22) induzierten sinusförmigen Spannung überlagert werden, dadurch gekennzeichnet, dass nach Ablauf der festlegbaren Zeitspanne $(t_2-t_5)$ des ersten Teils der Nominallaufregelung die Steuerimpulse $(T_n, S_n)$ aus den abfallenden Flanken der Sollfrequenz-Impulse $(f_s)$ und der Istfrequenz-Impulse (i) gebildet und ausschliesslich während der positiven Halbwellen der in der Arbeitswicklung (22) induzierten Spannung an die Arbeitswicklung (22) abgegeben werden.

3. Anordnung zur Durchführung des Verfahrens nach Anspruch 1 oder 2, für einen Uhrenmotor (2) mit einem permanentmagnetischen Läufer (21), der mindestens ein Polpaar aufweist, und einem Ständer mit zwei oder mehr Wicklungen (22, 23), von denen mindestens eine Wicklung als Arbeitswicklung (22) mit Steuerimpulsen beaufschlagt ist und mindestens eine weitere Wicklung als Steuerwicklung (23) der Läuferbewegung gegenüber dem Ständer proportionale Impulse abgibt, mit einem Vergleichsglied (4), dessen erster Eingang mit der Steuerwicklung (23) des Uhrenmotors (2) verbunden ist und dessen zweiter Eingang mit einer Referenzspannung ($U_s$) beaufschlagt ist und dessen erster Ausgang für die Istfrequenz-Impulse (i) an den Eingang einer mit einer ersten Taktfrequenz ($f_1$) beaufschlagten Entstörstufe (521) angeschlossen ist, deren Ausgang einerseits an einen mit einer zweiten Taktfrequenz ($f_2$) beaufschlagten Phasenkomparator (6) und andererseits an ein mit einer dritten Taktfrequenz ($f_3$) beaufschlagtes Verzögerungsglied (522) angeschlossen ist, wobei die Ausgänge ($Q_1$, $Q_3$) des Phasenkomparators (6) sowie die Ausgänge (I, Ī) des Verzögerungsgliedes (522) an eine Verknüpfungslogik (10) und der Ausgang der Verknüpfungslogik (10) über eine Ansteuerlogik (9) an eine Schaltstufe (3) angeschlossen sind, die sowohl mit der Versorgungsspannung ($\pm U_B$) beaufschlagt als auch mit den Wicklungen (22, 23) des Uhrenmotors (2) verbunden ist, und wobei der Phasenkomparator (6) zwei getaktete Flip-Flops (D14, D15) enthält, an deren Eingänge die Sollfrequenz-Impulse ($f_s$) bzw. die entstörten Istfrequenz-Impulse ($i_1$) und an deren Takteingänge ($C_k$) die zweite Taktfrequenz ($f_2$) anliegen, deren Ausgänge über eine Verriegelungsschaltung (61) mit einem Schieberegister (62) verbunden sind, das mehrere Ausgangssignale ($\overline{Q}_5$, $Q_A$, $Q_B$) abgibt, dadurch gekennzeichnet, dass eine Zeitstufe (12) zur Festlegung der Zeitspanne ($t_2$–$t_5$) des ersten Teils der Nominallaufregelung ein erstes Signal (D) an die Verriegelungsschaltung (61) und ein zweites Signal (E) an einen Eingang eines NAND-Gatters (G50) abgibt, dessen anderer Eingang mit dem einen Ausgangssignal ($\overline{Q}_5$) des Schieberegisters (62) beaufschlagt ist und das ein Ausgangssignal ($Q_C$) abgibt, wobei die Ausgangssignale (E, D) der Zeitstufe (12), das Ausgangssignal ($Q_C$) des NAND-Gatters (G50) und die auf die Arbeitswicklung (22) in Abhängigkeit von den Ausgangssignalen ($Q_A$, $Q_B$; $Q_C$) des Schieberegisters (62) und des NAND-Gatters (G50) gegebenen Antriebsimpulse folgender Wahrheitstabelle genügen:

| Zeitdauer | Signale | | Dekodierte Impulsflanken $f_s$ und i | | Pegel Qc | Antriebsimpulse (in Abh. von $Q_A$, $Q_B$, $Q_C$, I, Ī) |
|---|---|---|---|---|---|---|
| | E | D | ansteigend | abfallend | | |
| ca. 1 bis 2 Sek. nach Beendigung des Selbstanlaufs ($t_2 - t_5$) | L | H | ja | ja | abhängig von Gatter 5 | positive oder negative Impulse in Abhängigkeit von $Q_B$, $Q_C$, I, Ī |
| unbegrenzt $t_5 \rightarrow \infty$ | H | L | nein | ja | immer niedrig | nur positive Impulse in Abhängigkeit von $Q_B$ |

4. Anordnung nach Anspruch 3, dadurch gekennzeichnet, dass ein weiterer Eingang des Vergleichsgliedes (4) mit einer zweiten Referenzspannung ($U_r$) beaufschlagt ist, dass ein zweiter Ausgang des Vergleichsgliedes (4) Ausgangssignale (v) abgibt, dass die Ausgänge des Vergleichsgliedes (4) mit den beiden Eingängen einer Entstör- und Verzögerungsstufe (5) verbunden sind, deren erster Ausgang die entstörten Istfrequenz-Impulse ($i_1$) an den Phasenkomparator (6) abgibt, deren zweiter Ausgang entstörte Ausgangsimpulse (V) an eine Selbstanlaufstufe (8) und ein Wartezeitglied (7) abgibt und deren dritter und vierter Ausgang entstörte und verzögerte Istfrequenz-Impulse (I) bzw. negierte entstörte und verzögerte Istfrequenz-Impulse (Ī) abgeben, dass der dritte und vierte Ausgang der Entstör- und Verzögerungsstufe (5) zusammen mit den Ausgängen ($Q_1$, $Q_3$) des Phasenkomparators (6) an die Verknüpfungslogik (10) angeschlossen sind und dass die Ausgangssignale ($\beta$, $\overline{\beta}$, $F_1$, $\overline{F}_1$, $F_2$, $\overline{F}_2$) abgebenden Ausgänge der Selbstanlaufstufe (8) und der Ausgang der Verknüpfungslogik (10) über die Ansteuerlogik (9) mit der Schaltstufe (3) verbunden sind, an der sowohl die Versorgungsspannung ($\pm U_B$) als auch die Wicklungen (22, 23) des Uhrenmotors (2) angeschlossen sind.

**Claims**

1. A method od regulating a clock motor (2) having a permanent-magnetic rotor (21) which comprises at least one pair of poles, and a stator with two or more windings (22, 23) of which at least one winding is acted upon by control pulses as a working winding (22) and at least one further winding serves as a control winding (23) for the delivery of pulses proportional to the rotor movement in relation to the stator, which pulses are converted into rectangular actual-frequency pulses (i) and, during the nominal running regulation, are compared, with regard to their width and phase position, with desired frequency pulses ($f_s$) of preset frequency, while, in the event of actual-frequency pulses (i) lagging behind the desired frequency pulses ($f_s$), control pulses ($T_n$, $S_n$) are delivered to the working winding (22) to accelerate the permanent magnetic rotor (21) and in the event of the speed (n) of the permanent magnetic rotor (21) dropping below a present value, a self-starting is initiated for the step-by-step or quasi-continuous increase of the rotor speed, in that the control pulses ($T_n$, $S_n$) are applied alternately to the working winding (22) and control winding (23) or cyclically to the working winding (22), control winding (23) and further windings, and wherein, when·a fixed speed is reached, the self-starting is automatically switched off and the nominal running regulation is switched on, characterised in that, immediately after the ending of each self-starting operation, for a fixable period of time $(t_2-t_5)$, a first part of a nominal running regulation takes place during which the actual-frequency pulses (i) derived from the control winding (23) are compared more often with the desired frequency pulses $(f_s)$ than during a second part of the nominal running regulation taking place after the end of the fixable period of time $(t_2-t_5)$.

2. A method as claimed in claim 1, wherein the actual-frequency pulses (i) are delayed and in the fixable period of time $(t_2-t_5)$ of the first part of the nominal running regulation after the end of the self-starting operation, in order to increase the speed of the clock motor (2) in the required direction of rotation, the rising edges of the control pulses $(T_n, S_n)$ are initiated by the rising edges of the desired frequency pulses $(f_s)$ and the falling edges of the control pulses $(T_n, S_n)$ are initiated by the rising edges of the actual-frequency pulses (i) which appear during a suppressed and delayed actual-frequency pulse (I), or, in order to reduce the speed of the clock motor (2) counter to the required direction of rotation, the rising edges of the control pulses $(T_n, S_n)$ are initiated by the falling edges of the desired frequency pulses $(f_s)$ and the falling edges of the control pulses $(T_n, S_n)$ are initiated by the falling edges of the actual-frequency pulses (i) which appear during a suppressed and delayed actual-frequency pulse (I), or in order to reduce the speed of the clock motor (2) both in the desired direction of rotation and counter to the desired direction of rotation, the working winding (22) is short-circuited from the moment of the rising or falling edge of the actual-frequency pulse (i) to the moment of the appearance of the rising or falling edge of the desired frequency pulse $(f_s)$, while the control pulses $(T_n, S_n)$ are superimposed on the sinusoidal voltage induced in the working winding (22), characterised in that, after the expiration of the fixable period of time $(t_2-t_5)$ of the first part of the nominal running regulation, the control pulses $(T_n, S_n)$ are formed from the falling edges of the nominal-frequency pulses $(f_s)$ and of the actual-frequency pulses (i) and are delivered to the working winding (22) exclusively during the positive half waves of the voltage induced in the working winding (22).

3. A device for carrying out the methods as claimed in claim 1 or 2, for a clock motor (2) having a permanent magnetic rotor (21) which comprises at least one pair of poles, and a stator with two or more windings (22, 23), of which at least one winding, as a working winding (22), is acted upon by control pulses and at least one further winding, as a control winding (23), delivers pulses proportional to the rotor movement in relation to the stator, having a comparison element (4), the first input of which is connected to the control winding (23) of the clock motor (2) and the second input of which is acted upon by a reference voltage $(U_s)$, and the first output of which, for the actual frequency pulses (i), is connected to the input of suppressor stage (521) which is acted upon by a first clock frequency $(f_1)$ and the output of which is connected, on the one hand to a phase comparator (6) acted upon by a second clock frequency $(f_2)$ and on the other hand to a delay element (522), the outputs $(Q_1, Q_3)$ of the phase comparator (6) and the outputs (I, Ī) of the delay element (522) being connected to a combinational logic (10) and the output of the combinational logic (10) being connected through a control logic (9) to a switching stage (3) which is not only acted upon by the supply voltage $(\pm U_B)$ but is also connected to the windings (22, 23) of the clock motor (2), and wherein the phase comparator (6) contains two clocked flip-flops (D14, D15), to the inputs of which the desired frequency pulses $(f_s)$ and the suppressed actual-frequency pulses $(i_1)$ are applied and to the clock inputs $(C_k)$ of which, the second clock frequency $(F_2)$ is applied, their outputs being connected, through an interlock circuit (61), to a shift register (62) which delivers a plurality of output signals $(\overline{Q}_5, Q_A, Q_B)$ characterised in that a time stage (12) for fixing the period of time $(t_2-t_5)$ of the first part of the nominal running regulation delivers a first signal (D) to the interlock circuit (61) and a second signal (E) to one input of a NAND gate (G50), the other input of which is acted upon by the one output signal $(\overline{Q}_5)$ of the shift register (62) and which delivers an output signal $(Q_C)$, the output signals (E, D) of the time stage (12), the output signal $(Q_C)$ of the NAND gate (G50) and the drive pulses delivered to the working winding (22) depending on the output signals $(Q_A, Q_B, Q_C)$ of the shift register (62) and of the NAND gate (G50) satisfying the following truth table:

| | Signals | | Decoded pulse edges $f_s$ and i | | Level Qc | Drive pulses (Depending on $Q_A$, $Q_B$, $Q_C$, I, Ī) |
| Period of time | E | D | rising | falling | | |
| --- | --- | --- | --- | --- | --- | --- |
| about 1 to 2 seconds after ending of the self-starting $(t_2-t_5)$ | L | H | yes | yes | dependent on gate 5 | positive or negative pulses depending on $Q_b$, $Q_c$, I, Ī |
| unlimited $t_5 \rightarrow \infty$ | H | L | no | yes | always low | only positive pulses depending on $Q_B$ |

4. A device as claimed in claim 3, characterizsed in that a further input of the comparison element (4) is acted upon by a second reference voltage (U$_r$), that a second output of the comparison element (4) delivers output signals (v), that the outputs of the comparison element (4) are connected to the two inputs of a suppression and delay stage (5), the first output of which delivers the suppressed actual-frequency pulses (i$_1$) to the phase comparator (6), the second output of which delivers suppressed output pulses (V) to a selfstarting stage (8) and a waiting-time element (7) and the third and fourth outputs of which deliver suppressed and delayed actual-frequency pulses (I) and negated suppressed and delayed actual-frequency pulses ($\bar{\text{I}}$) respectively, that the third and fourth outputs of the suppression and delaying stage (5), together with the outputs (Q$_1$, Q$_3$) of the phase comparator (6), are connected to the combinational logic (10) and that the outputs of the self-starting stage (8) delivering the output signals β, $\bar{\beta}$, F$_1$, $\bar{\text{F}}_1$, F$_2$, $\bar{\text{F}}_2$) and the output of the combinational logic (10) are connected, through the control logic (9), to the switching stage (3) to which both the supply voltage (± U$_B$) and the windings (22, 23) of the clock motor (2) are connected.

**Revendications**

1. Procédé pour régler un moteur d'horloge (2) ayant un rotor (21) à aimantation permanente, qui présente au moins une paire de pôles, et un stator avec deux ou davantage d'enroulements (22, 23) dont l'un au moins, en tant qu'enroulement de travail (22) est soumis à des impulsions de commande et au moins un autre enroulement, en tant qu'enroulement de commande (23), sert à délivrer des impulsions proportionnelles au mouvement du rotor par rapport au stator, qui sont transformées en impulsions carrées de fréquence effective (i) et sont comparées, pendant la régulation de marche normale ou nominale, quant à leur largeur et leur phase, avec des impulsions de fréquence de consigne (f$_s$) ayant une fréquence préfixée, procédé dans lequel, lorsque les impulsions de fréquence effective (i) sont en retard par rapport aux impulsions de fréquence de consigne (f$_s$), des impulsions de commande (T$_n$, S$_n$) pour l'accélération du rotor (21) à aimantation permanente sont délivrées à l'enroulement de travail (22) et, lorsque la vitesse de rotation (n) du rotor (21) descend au-dessous d'une valeur préfixée, un autodémarrage est déclenché pour l'augmentation par paliers ou quasi-continue de la vitesse du rotor, du fait que les impulsions de commande (T$_n$, S$_n$) sont appliquées alternativement à l'enroulement de travail (22) et à l'enroulement de commande (23), ou sont appliquées cycliquement à l'enroulement de travail (22), l'enroulement de commande (23) et d'autres enroulements, et dans lequel, lorsqu'une vitesse de rotation donnée est atteinte, l'autodémarrage est automatiquement arrêté et la régulation de marche normale est enclenchée, caractérisé en ce que, immédiatement après la fin de chaque fonctionnement en autodémarrage, une première partie d'une régulation de marche normale se déroule pendant un laps de temps (t$_2$–t$_5$) fixable, dans laquelle les impulsions de fréquence effective (i), dérivées de l'enroulement de commande (23), sont comparées plus souvent avec les impulsions de fréquence de consigne (f$_s$) que dans une deuxième partie de la régulation de marche normale, se déroulant après la fin du laps de temps (t$_2$–t$_5$).

2. Procédé selon la revendication 1, dans lequel les impulsions de fréquence effective (i) sont retardées et, dans le laps de temps (t$_2$–t$_5$) de la premère partie de la régulation de marche normale, après la fin du fonctionnement en autodémarrage, pour augmenter la vitesse de rotation du moteur d'horloge (2) dans le sens de rotation désiré, les flancs montants des impulsions de commande (T$_n$, S$_n$) sont déclenchés par les flancs montants des impulsions de fréquence de consigne (f$_s$) et les flancs descendants des impulsions de commande (T$_n$, S$_n$) sont déclenchés par les flancs montants des impulsions de fréquence effective (i) qui se produisent pendant une impulsion déparasitée et retardée de fréquence effective (I) ou pour réduire la vitesse de rotation du moteur d'horloge (2) en sens contraire au sens de rotation désiré, les flancs montants des impulsions de commande (T$_n$, S$_n$) sont déclenchés par les flancs descendants des impulsions de fréquence de consigne (f$_s$) et les flancs descendants des impulsions de commande (T$_n$, S$_n$) sont déclenchés par les flancs descendants des impulsions de fréquence effective (i) qui se produisent pendant une impulsion déparasitée et retardée de fréquence effective (I) ou, pour réduire la vitesse de rotation du moteur d'horloge (2) aussi bien dans les sens de rotation désiré qu'en sens contraire, l'enroulement de travail (22) est court-circuité, à l'instant du flanc montant respectivement du flanc descendant des impulsions de fréquence effective (i), jusqu'à l'instant d'apparition du flanc montant respectivement du flanc descendant des impulsions de fréquence de consigne (f$_s$), les impulsions de commande (T$_n$, S$_n$) étant superposées à la tension sinusoïdale induite dans l'enroulement de travail (22), caractérisées en ce que, après l'écoulement du laps de temps (t$_2$–t$_5$) de la première partie de la régulation de marche normale, les impulsions de commande (T$_n$, S$_n$) sont formées à partir des flancs descendants des impulsions de fréquence de consigne (f$_s$) et des impulsions de fréquence effective (i) et sont uniquement délivrées à l'enroulement de travail (22) pendant les demi-ondes positives de la tension induite dans cet enroulement.

3. Dispositif pour la mise en œuvre du procédé selon la revendication 1 ou 2, destiné à un moteur d'horloge (2) ayant un rotor (21) à aimantation permanente, qui présente au moins une paire de pôles, et un stator avec deux ou davantage d'enroulements (22, 23) dont l'un au moins, en tant qu'enroulement de travail (22), est soumis à des impulsions de commande et au moins un autre enroulement, en tant qu'enroulement de commande (23), sert à délivrer des impulsions proportionnelles au mouvement du rotor par rapport au stator, dispositif qui comprend un élément de comparaison (4) dont la première entrée est reliée à l'enroulement de commande (23) du moteur d'horloge (2), dont la deuxième entrée est soumise à une tension de référence ($U_s$) et dont la première sortie, pour les impulsions de fréquence effective (i), est connectée à l'entrée d'un étage d'antiparasitage (521), auquel est appliquée une première fréquence d'horloge ($f_1$), dont la sortie est connectée, d'une part à un comparateur de phases (6), auquel est appliquée une deuxième fréquence d'horloge ($f_2$) et d'autre part à un élément de temporisation (522), auquel est appliquée une troisième fréquence d'horloge ($f_3$), les sorties ($Q_1$, $Q_3$) du comparateur de phase (6) et les sorties ($I$, $\bar{I}$) de l'élément de temporisation (522) étant connectées à une logique combinatoire (10) et la sortie de la logique combinatoire (10) étant connectée à travers une logique d'attaque (9) à un étage de commutation (3), lequel est à la fois soumis à la tension d'alimentation ($\pm U_B$) et relié aux enroulements (22, 23) du moteur d'horloge (2), le comparateur de phases (6) contenant deux bascules rythmées (D14, D15), aux entrées desquelles sont appliquées les impulsions de fréquence de consigne ($f_s$) respectivement les impulsions de fréquence effective déparasitées ($i_1$), et aux entrées d'horloge ($C_k$) desquelles est appliquée la deuxième fréquence d'horloge ($f_2$), les sorties des bascules étant reliées à travers un circuit de verrouillage (61) à un registre à décalage (62) qui délivre plusieurs signaux de sortie ($\bar{Q}_5$, $Q_A$, $Q_B$), caractérisé en ce qu'un étage de temps (12), destiné à fixer le laps de temps ($t_2$–$t_5$) de la première partie de la régulation de marche normale, délivre un premier signal (D) au circuit de verrouillage (61) et un second signal (E) à une entrée d'une porte NON-ET (G50) dont l'autre entrée reçoit un signal de sortie ($\bar{Q}_5$) du registre à décalage (62) et qui délivre un signal de sortie ($Q_C$), les signaux de sortie (E, D) de l'étage de temps (12), le signal de sortie ($Q_C$) de la porte NON-ET (G50) et les impulsions d'entraînement, appliquées à l'enroulement de travail (22) en fonction des signaux de sortie ($Q_A$, $Q_B$, $Q_C$) du registre à décalage (62) et de la porte NON-ET (G50) satisfaisant à la table de vérité suivante:

| Durée | Signaux | | Flancs d'impulsions décodés $f_s$ et i | | Niveau Qc | Impulsions d'entraînement (en fonction de $Q_A$, $Q_B$, $Q_C$, $I$, $\bar{I}$) |
|---|---|---|---|---|---|---|
| | E | D | montants | descendants | | |
| env. 1 à 2 s après la fin de l'autodémarrage ($t_2$–$t_5$) | L | H | oui | oui | fonction de la porte 5 | impulsions positives ou négatives en fonction de $Q_S$, $Q_C$, $I$, $\bar{I}$) |
| illimitée $t_5 \rightarrow \infty$ | H | L | non | oui | toujours bas | uniquement impulsions positives en fonction de $Q_B$ |

4. Dispositif selon la revendication 3, caractérisé en ce qu'un autre entrée de l'élément de comparaison (4) est soumise à une deuxième tension de référence ($U_r$), qu'une deuxième sortie de l'élément de comparaison (4) délivre des signaux de sortie (v), que les sorties de l'élément de comparaison (4) sont reliées aux deux entrées d'un étage d'antiparasitage et de temporisation (5) dont la première sortie délivre les impulsions déparasitées de fréquence effective ($i_1$) au comparateur de phases (6), dont la deuxième sortie délivre des impulsions de sortie déparasitées (V) à un étage d'autodémarrage (8) et à un élément de temps d'attente (7), et dont les troisième et quatrième sorties délivrent des impulsions déparasitées et retardées de fréquence effective (I), respectivement des impulsions déparasitées et retardées de fréquence effective qui ont été inversées ($\bar{I}$), que les troisième et quatrième sorties de l'étage d'antiparasitage et de temporisation (5) sont connectées, ensemble avec les sorties ($Q_1$, $Q_3$) du comparateur de phases (6), à la logique combinatoire (10) et que les sorties de l'étage d'autodémarrage (8) et la sortie de la logique combinatoire (10), délivrant des signaux de sortie ($\beta$, $\bar{\beta}$, $F_1$, $\bar{F}_1$, $F_2$, $\bar{F}_2$), sont reliées à travers la logique d'attaque (9) à l'étage de commutation (3), auquel sont connectés à la fois la tension d'alimentation ($\pm U_B$) et les enroulements (22, 23) du moteur d'horloge (2).

FIG.1

FIG. 2

FIG.3

0 094 696

19

FIG.4

FIG.5

FIG. 6